# FASCICULE DE BREVET EUROPEEN

(11) **EP 2 509 478 B1**
(45) Date de publication et mention de la délivrance du brevet: **30.07.2014**
(21) Numéro de dépôt: 10803110.5
(22) Date de dépôt: 30.11.2010
(51) Int. Cl.: A47J 43/046, A47J 43/07

(54) **APPAREIL ELECTROMENAGER DE PREPARATION CULINAIRE COMPORTANT UN RECIPIENT DE TRAVAIL COMPRENANT UNE RESISTANCE ELECTRIQUE**
HAUSHALTSKOCHGERÄT MIT ARBEITSGEFÄSS MIT ELEKTRISCHEM WIDERSTAND
HOUSEHOLD COOKING APPLIANCE COMPRISING A WORK RECEPTACLE INCLUDING AN ELECTRIC RESISTOR

(30) Priorité: 03.12.2009 FR 0905839
(43) Date de publication de la demande: 17.10.2012
(73) Titulaire: SEB S.A., 69130 Ecully (FR)
(72) Inventeur: DESHAYES, Jean-Louis, 53700 Averton (FR); GERARD, Emmanuel, 61410 Couterne (FR); BLANCHARD, Thierry, 53000 Laval (FR)
(74) Mandataire: Bourrières, Patrice
(86) Numéro de dépôt international: PCT/FR2010/052579
(87) Numéro de publication internationale: WO 2011/067532

(56) Documents cités:
- WO-A1-2005/037036
- US-A1- 2008 264 270

## Description

La présente invention se rapporte au domaine technique général des appareils électroménagers de préparation culinaire comportant une base renfermant un moteur pour l'entraînement d'un outil rotatif disposé dans le fond d'un récipient de travail reposant de manière amovible sur la base et se rapporte plus particulièrement à un appareil électroménager dans lequel le récipient de travail est chauffé au moyen d'une résistance chauffante électrique.

Il est connu, de la demande de brevet WO2005/037036, un appareil de préparation culinaire, de type blender, comprenant une base renfermant un moteur pour l'entraînement d'un outil rotatif disposé dans un récipient de travail amovible, le récipient de travail comportant une résistance chauffante disposée dans le fond du récipient permettant de chauffer le contenu du récipient de travail. Dans ce document, la résistance chauffante est reliée électriquement à un circuit d'alimentation contenu dans la base au moyen d'un connecteur, le connecteur comportant des broches disposées sous la poignée du récipient venant s'engager dans un socle de la base lorsque le récipient de travail est posé sur la base.

Un tel appareil muni d'une résistance chauffante présente l'avantage de permettre la préparation d'un grand nombre de boissons chaudes. De plus, des blenders chauffant peuvent également être utilisés pour réaliser des soupes, la résistance chauffante permettant la cuisson des aliments simultanément ou indépendamment du fonctionnement de l'outil rotatif.

Cependant, un tel blender chauffant présente l'inconvénient de permettre le retrait du récipient de travail amovible en cours de chauffage, c'est-à-dire lorsque la résistance chauffante est encore alimentée électriquement, de sorte que le connecteur électrique peut se trouver rapidement détérioré par l'arc électrique se produisant entre les broches et le socle du connecteur lors de ce retrait du récipient.

Aussi, un but de la présente invention est de proposer un appareil électroménager de préparation culinaire remédiant à ces inconvénients qui soit simple et économique à réaliser.

A cet effet, l'invention se rapporte à un appareil électroménager de préparation culinaire comportant une base renfermant un moteur et comprenant un récipient de travail disposé de manière amovible sur la base, le récipient de travail étant muni d'une poignée de préhension et renfermant un outil entraîné en rotation par le moteur, le récipient de travail comportant également une résistance chauffante électrique permettant de chauffer le contenu du récipient de travail, la résistance chauffante électrique étant alimentée par un circuit d'alimentation comportant un connecteur électrique établissant une liaison déconnectable entre une partie du circuit d'alimentation portée par la base et une partie du circuit d'alimentation portée par le récipient de travail, caractérisé en ce que le circuit d'alimentation comporte un interrupteur permettant d'interrompre l'alimentation électrique de la résistance chauffante et en ce qu'un dispositif de sécurité vient actionner l'interrupteur afin d'interrompre l'alimentation de la résistance chauffante préalablement à la déconnection du connecteur lorsque le récipient de travail est retiré de sa base.

Selon une autre caractéristique de l'invention, l'interrupteur est disposé dans la base, le dispositif de sécurité comportant des moyens de commande intégrés dans la base, aptes à agir sur l'interrupteur, et des moyens d'actionnement intégrés dans la poignée du récipient de travail, aptes à agir sur les moyens de commande.

Une telle caractéristique permet notamment d'actionner l'interrupteur lorsque le récipient de travail est retiré de sa base en étant saisi à pleine main par la poignée de préhension.

Selon une autre caractéristique de l'invention, le dispositif de sécurité comporte une gâchette portée par la poignée du récipient de travail, l'actionnement manuel de la gâchette venant interrompre l'alimentation de la résistance chauffante.

Selon une autre caractéristique de l'invention, le dispositif de sécurité comporte un organe de verrouillage immobilisant automatiquement le récipient de travail sur la base, l'organe de verrouillage étant déplacé dans une position de déverrouillage permettant le retrait du récipient de travail lorsque la gâchette du récipient de travail est activée.

Selon encore une autre caractéristique de l'invention, l'organe de verrouillage est constitué par un crochet faisant saillie sur une embase du récipient de travail, le crochet venant s'engager dans une ouverture de la base lorsque le récipient de travail est disposé dans un logement de réception de la base.

Selon encore une autre caractéristique de l'invention, les moyens de commande intégrés dans la base comprennent un levier de commande comportant un ergot venant en bordure du crochet lorsque le récipient de travail est verrouillé sur la base, le déplacement du crochet vers la position de déverrouillage entraînant le déplacement du levier de commande dans une position dans laquelle l'alimentation électrique de la résistance chauffante est interrompue par l'interrupteur.

Selon une autre caractéristique de l'invention, le levier de commande agit sur un organe d'actionnement comportant une came apte à actionner un contacteur de l'interrupteur.

Selon une autre caractéristique de l'invention, les moyens de commande intégrés dans la poignée comportent une tige de détection de la présence d'un couvercle de fermeture du récipient de travail, la tige de détection agissant sur l'organe d'actionnement de manière à ce que l'absence de couvercle sur le récipient de travail provoque le déplacement de l'organe d'actionnement dans une position dans laquelle la came n'actionne pas le contacteur de l'interrupteur.

Selon une autre caractéristique de l'invention, l'interrupteur interrompt également l'alimentation électrique du moteur.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil blender selon un mode particulier de réalisation de l'invention,
- la figure 2 est une vue en coupe de l'appareil de la figure 1,
- la figure 3 est une vue en perspective du dessous du récipient de travail de l'appareil de la figure 1,
- la figure 4 est une vue en perspective du dessus de la base de l'appareil de figure 1,
- les figures 5 et 6 sont des vues en perspective d'un premier module du dispositif de sécurité, ce module étant intégré dans la base de l'appareil de la figure 1,
- les figures 7 et 8 sont des vues en perspective éclatée du premier module du dispositif de sécurité des figures 5 et 6,
- la figure 9 est une vue en perspective d'un second module du dispositif de sécurité, ce second module étant intégré dans la poignée et coopérant avec le premier module des figures 5 et 6, le dispositif de sécurité étant représenté dans une position correspondant à l'absence de couvercle sur le récipient de travail et la gâchette de la poignée non actionnée.
- La figure 10 est une autre vue en perspective du dispositif de sécurité lorsque le couvercle est absent du récipient de travail et que la gâchette de la poignée n'est pas actionnée.
- La figure 11 est une vue en perspective du dispositif de sécurité illustré sur la figure 9 lorsque le couvercle est verrouillé sur le récipient de travail et que la gâchette de la poignée n'est pas actionnée.
- La figure 12 est une vue en perspective du dispositif de sécurité de la figure 11 lorsque la gâchette de la poignée est actionnée.
- La figure 13 est une autre vue en perspective du dispositif de sécurité lorsque le couvercle est verrouillé sur le récipient de travail et que la gâchette de la poignée est actionnée.

Seuls les éléments nécessaires à la compréhension de l'invention ont été représentés. Pour faciliter la lecture des dessins, les mêmes éléments portent les mêmes références d'une figure à l'autre.

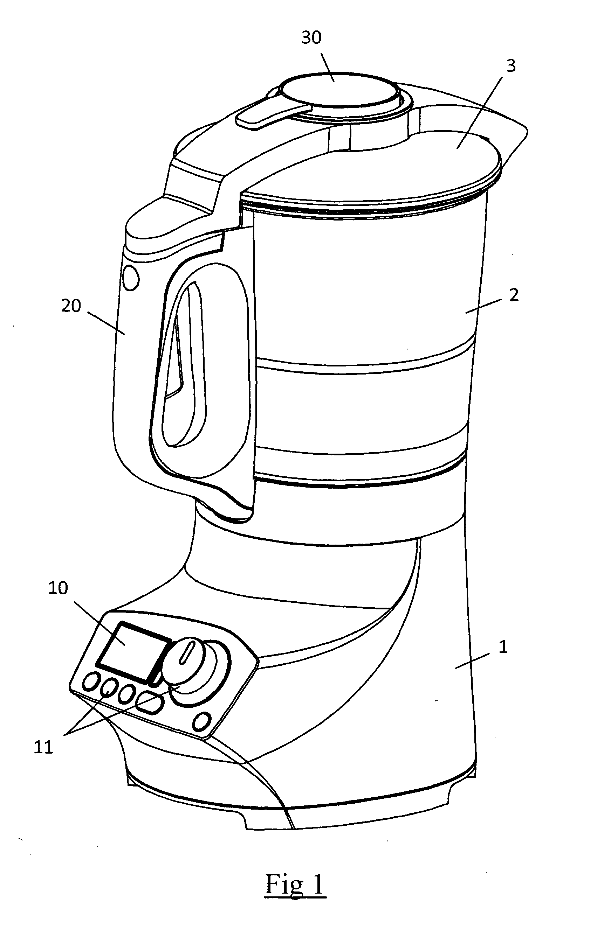

La figure 1 représente un appareil de préparation culinaire, de type blender, comportant une base 1 comprenant une face avant munie d'un écran d'affichage 10 et de touches de commande 11, la base 1 supportant un récipient de travail 2 comprenant une poignée 20 et un couvercle 3 amovible muni d'une ouverture centrale fermée par un bouchon doseur 30.

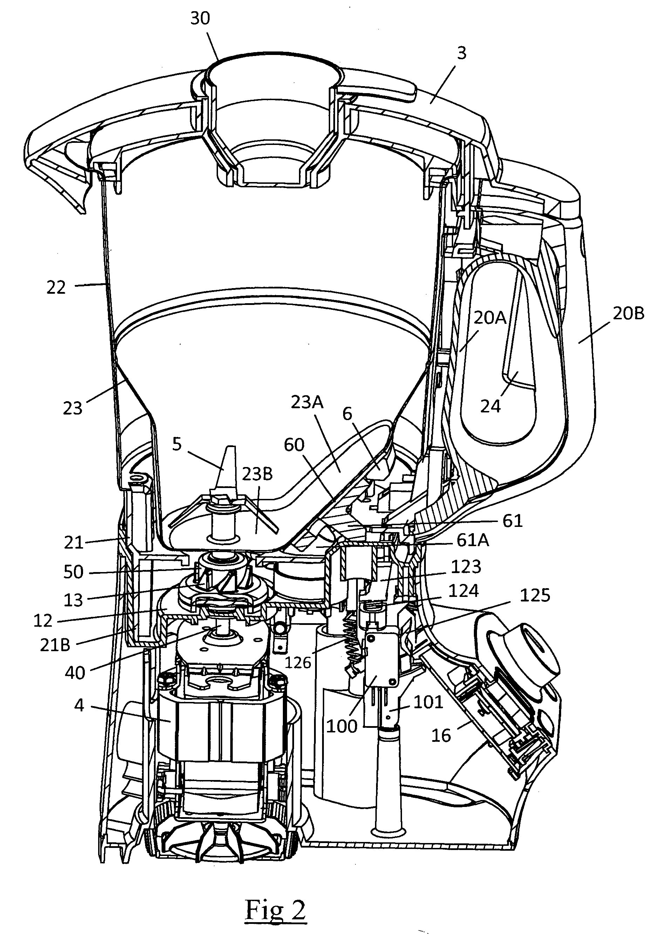

Comme on peut le voir sur les figures 2 à 4, le récipient de travail 2 est amovible de la base 1 et comporte à cet effet une extrémité inférieure comprenant une embase 21 venant s'engager dans un socle de réception 12 de la base 1, l'embase 21 présentant une forme complémentaire de celle du socle de réception 12 de manière à assurer le guidage et le maintien en position du récipient 2 sur le socle de réception 12 selon une seule orientation.

Conformément à la figure 2, la base 1 renferme un moteur 4 comportant un arbre de sortie 40 relié directement à un entraîneur 13 faisant saillie de manière excentrée sur le socle de réception 12, le moteur 4 étant préférentiellement un moteur de type universel, d'une puissance comprise entre 500 W et 700 W, pouvant atteindre une vitesse de rotation de l'ordre de 20 000 tr/mn.

Le récipient de travail 2 comporte une enveloppe 22 sensiblement cylindrique, préférentiellement en métal ou en matériau transparent tel que du verre ou du plastique, comportant une ouverture supérieure fermée par le couvercle 3 et comprenant une partie inférieure recevant un fond 23 métallique, réalisé avantageusement en matériau inox. Le fond 23 métallique est avantageusement rapporté par collage contre l'enveloppe cylindrique 22 et reçoit un outil rotatif 5 dont l'extrémité inférieure comporte un entraîneur 50 venant coopérer avec l'entraîneur 13 de la base 1 lorsque le récipient 2 est disposé sur le socle de réception 12.

Le fond 23 du récipient reçoit également une résistance chauffante 6 électrique en forme de U, du type résistance blindée, qui est disposée contre la face inférieure d'une partie inclinée 23A du fond 23. La partie inclinée 23A est surélevée par rapport à une partie basse 23B du fond 23 recevant l'outil rotatif 5 de sorte que le volume autour de l'outil rotatif 5 constitue un foyer de mixage de volume réduit dans lequel les aliments projetés contre le plan incliné 23A sont ramenés par gravité. Un tel foyer de mixage présente l'avantage de permettre un excellent brassage des aliments tout en chargeant peu l'outil rotatif 5 permettant ainsi d'utiliser un moteur 4 de faible puissance. Un tel récipient 2 permet également de traiter de faibles quantités d'ingrédients avec une très grande efficacité.

De manière avantageuse, une plaque d'aluminium 60 est interposée entre la partie inclinée 23A et la résistance chauffante 6 de manière à favoriser la diffusion thermique, cette plaque d'aluminium 60 recevant également un bloc d'aluminium 61 comportant un plot 61 A sur lequel vient s'appuyer un capteur de température 14 porté par la base 1 lorsque le récipient de travail 2 est placé sur le socle de réception 12, le capteur de température étant constitué par exemple par une thermistance de type CTN.

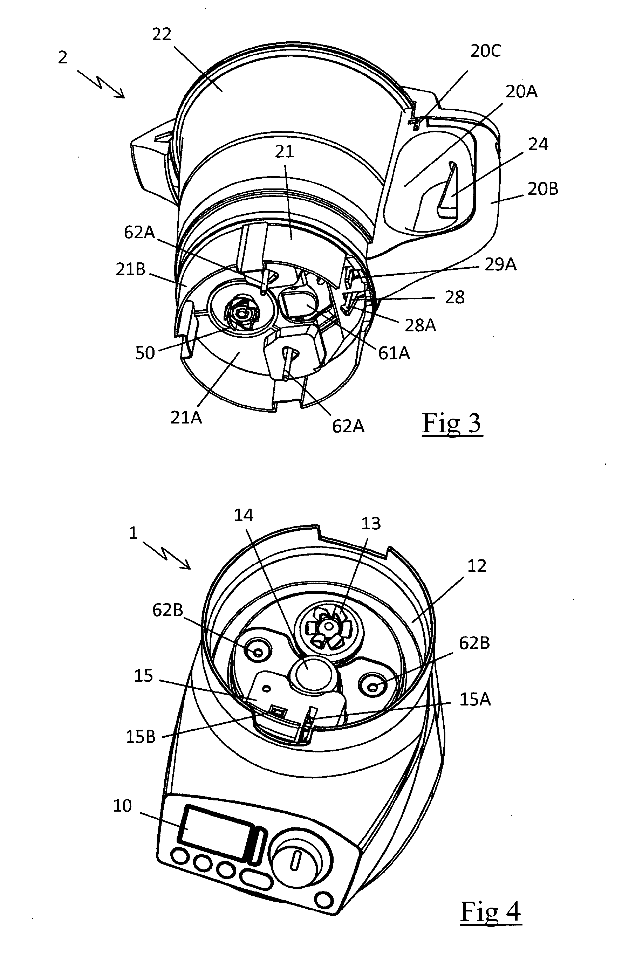

Conformément aux figures 3 et 4, la résistance chauffante 6 est reliée électriquement à deux broches 62A mâles d'un connecteur permettant de relier la résistance chauffante 6 électrique à un circuit d'alimentation intégré dans la base 1. Ces broches 62A font saillie au travers d'une paroi 21A de l'embase venant masquer le fond 23 métallique du récipient, l'embase 21 comportant également une jupe cylindrique 21 B, en matière plastique, venant dans le prolongement de l'enveloppe 22 du récipient de travail et descendant sous le niveau des broches 62A afin que le récipient 2 puisse reposer sur son embase 21 sans reposer sur les broches 62A. De manière avantageuse, une broche de mise à la terre, non visible sur les figures, fait également saillie au travers de la paroi 21A de l'embase pour permettre le raccordement à la terre de certaines parties métalliques du récipient 2.

Lorsque le récipient de travail 2 est placé sur la base 1, les deux broches 62A viennent s'insérer dans deux fiches femelles 62B portées par le socle de réception 12, les deux fiches femelles 62B permettant l'alimentation électrique de la résistance chauffante 6 à partir du circuit d'alimentation intégré dans la base 1, cette dernière étant reliée au réseau électrique domestique au moyen d'un cordon d'alimentation, non représenté sur les figures.

De manière préférentielle, le circuit d'alimentation disposé dans la base 1 comporte une carte de commande 16, visible uniquement sur la figure 2, qui contrôle à la fois le fonctionnement du moteur 4 et le fonctionnement de la résistance chauffante 6, cette carte de commande 16 recevant la valeur de la température mesurée par le capteur de température 14 et assurant la régulation de l'alimentation de la résistance chauffante 6 de façon à amener le contenu du récipient 2 à une température de consigne.

Cette carte de commande 16 comprend avantageusement des mémoires dans lesquelles sont stockées des séquences de fonctionnement prédéfinies du moteur 4 et de la résistance chauffante 6. La carte de commande 16 est reliée à l'écran d'affichage 10 de la face avant, où sont indiqués les différents modes opératoires possibles, et les touches de commandes 11 permettent à l'utilisateur de sélectionner une vitesse de rotation du moteur 4, une température de consigne du récipient 2 ou une recette particulière correspondant à la réalisation automatique de séquences de mixage et de chauffage.

Plus particulièrement selon l'invention, le circuit d'alimentation de la résistance chauffante 6 électrique comporte également un interrupteur 100 qui, lorsqu'il n'est pas actionné par un dispositif de sécurité, interrompt l'alimentation électrique de la résistance chauffante 6.

De manière préférentielle, cet interrupteur 100 sert aussi à l'alimentation du moteur 4 électrique de sorte que le fonctionnement du moteur 4 est interrompu par le dispositif de sécurité lorsque l'interrupteur 100 n'est pas actionné.

Conformément aux figures 2 et 4, le dispositif de sécurité de l'appareil comprend un premier module disposé dans la base 1, sous un relief 15 du socle de réception 12 comprenant deux ouvertures 15A, 15B venant dans le prolongement de la poignée 20 lorsque le récipient de travail 2 est placé sur la base 1, la poignée 20 comportant un montant vertical 20A s'étendant le long de l'enveloppe 22 du récipient de travail et une anse 20B comprenant une gâchette de commande 24 faisant saillie à l'intérieur de la poignée 20.

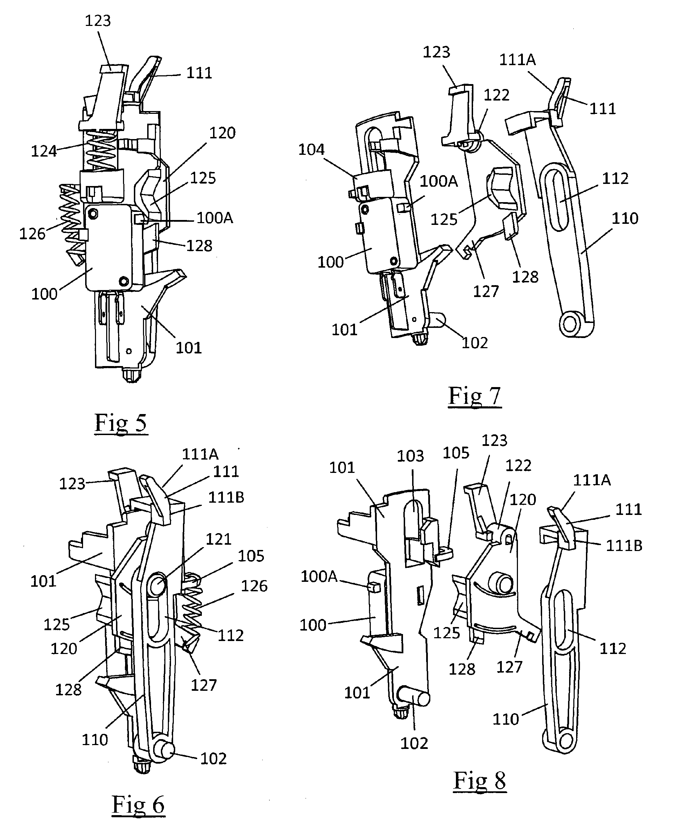

Comme on peut le voir plus précisément sur les figures 5 à 8 représentant isolément le premier module du dispositif de sécurité intégré à la base 1, ce dernier comporte un bâti 101 qui est fixé verticalement dans la base 1 de l'appareil, le bâti 101 supportant l'interrupteur 100, un levier de commande 110 et un organe d'actionnement 120 comprenant une came 125 destinée à coopérer avec un contacteur 100A de l'interrupteur 100.

Conformément aux figures 6 et 8, le levier de commande 110 comporte une extrémité inférieure qui est montée rotative autour d'un axe 102 et une extrémité supérieure munie d'un ergot 111 s'étendant vers le haut et comprenant une surface de guidage 111A dans le prolongement d'une surface d'appui 111B verticale.

Le levier de commande 110 comprend également un trou 112 oblong dans lequel vient s'engager un plot cylindrique 121 porté par une face de l'organe d'actionnement 120, la face opposée de l'organe d'actionnement 120 comportant un tourillon 122 s'engageant dans une lumière 103 du bâti 101 et dont l'extrémité supporte un bras 123 s'étendant verticalement.

Le bâti 101 comporte, à la base de la lumière 103, un logement 104 s'étendant sous le bras 123 de l'organe d'actionnement 120 et dans lequel est disposé un ressort 124, ce ressort 124 s'étendant verticalement et poussant sous l'extrémité inférieure du bras 123 pour amener le tourillon 122 à l'extrémité supérieure de la lumière 103, dans une position de repos telle qu'illustrée aux figures 5 et 6, dans laquelle la came 125 se trouve au dessus du contacteur 100A de l'interrupteur de sorte que l'interrupteur 100 n'est pas actionné.

Le bâti 101 comporte également un anneau 105 sur lequel est accrochée l'extrémité d'un ressort 126 exerçant un effort de traction sur un bras de levier 127 de sorte que l'organe d'actionnement 120 pivote autour du plot 121 vers une position de repos telle qu'illustrée aux figures 5 et 6, dans laquelle une butée 128 portée par l'organe d'actionnement 120 vient en appui contre le bord du bâti 101, la came 125 se trouvant alors dans l'alignement vertical du contacteur 100A.

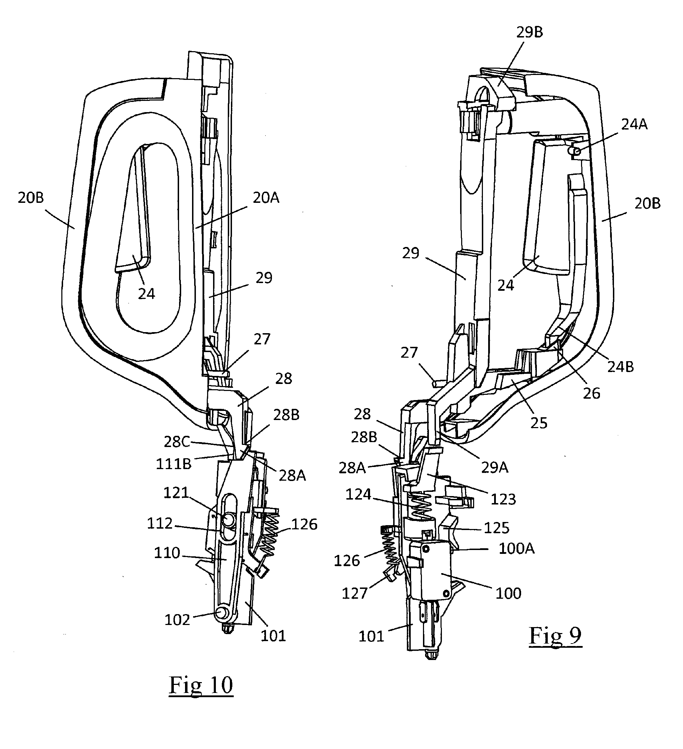

La figure 9 représente la coopération du premier module du dispositif de sécurité intégré dans la base 1 avec un second module intégré dans le récipient de travail 2, seuls les éléments nécessaires à la compréhension du fonctionnement du dispositif de sécurité étant représentés sur la figure 9.

Conformément à cette figure, la gâchette de commande 24 de la poignée pivote autour d'un axe 24A disposé à son extrémité supérieure et est reliée par son extrémité inférieure à un coulisseau 25 intégré dans la partie inférieure de la poignée 20. L'extrémité inférieure de la gâchette de commande 24 comporte à cet effet un doigt 24B s'engageant dans un logement 26 disposé à une première extrémité du coulisseau 25, le coulisseau 25 étant monté coulissant le long d'un axe 27 sensiblement horizontal et comportant une seconde extrémité munie d'un crochet 28 comprenant une tête 28A venant s'engager dans l'ouverture 15A du relief du socle de réception 12 lorsque le récipient de travail 2 est disposé sur la base 1.

Le coulisseau 25 est ramené par un ressort de rappel, non représenté sur les figures, dans une position de repos illustrée sur les figures 9 et 10 dans laquelle il se trouve avancé au maximum vers le centre du récipient 2, le crochet 28 comportant une surface de verrouillage 28B venant s'engager, sous l'effet du ressort de rappel, sous la paroi de la base 1 en bordure de l'ouverture 15A de manière à verrouiller le récipient 2 sur la base 1.

Conformément à la figure 10, le crochet 28 comporte également une surface latérale 28C venant se positionner le long de la surface d'appui 111 B de l'ergot du levier de commande 110 lorsque le coulisseau 25 est dans la position de repos, la gâchette 24 de la poignée se trouvant alors dans une position avancée.

La poignée 20 renferme également une tige de détection 29 de la présence du couvercle 3 qui est montée coulissante dans le montant vertical 20A de la poignée 20, la tige de détection 29 comportant une extrémité inférieure munie d'un doigt d'actionnement 29A coudé dont l'extrémité vient se placer verticalement au dessus du bras 123 de l'organe d'actionnement 120 lorsque le récipient de travail 2 est disposé sur la base 1, le doigt d'actionnement 29A faisant saillie au travers d'une ouverture de la paroi 21A de l'embase, comme on peut le voir sur la figure 3, pour venir s'engager dans l'ouverture 15B du relief de la base 1.

La tige de détection 29 comporte une extrémité supérieure munie d'une came 29B venant en regard d'une fente latérale 20C de la poignée, visible sur la figure 3, la tige de détection 29 étant ramenée par un ressort, non illustré sur les figures, dans une position de repos dans laquelle la tige de détection 29 occupe une position haute dans laquelle le doigt d'actionnement 29A n'appuie pas sur le bras 123 de l'organe d'actionnement 120, laissant le dispositif de sécurité dans sa position de repos. Dans cette position illustrée sur la figure 9, le fonctionnement du moteur 4 et de la résistance chauffante 6 électrique est rendu impossible par la coupure du circuit d'alimentation effectuée par l'interrupteur 100.

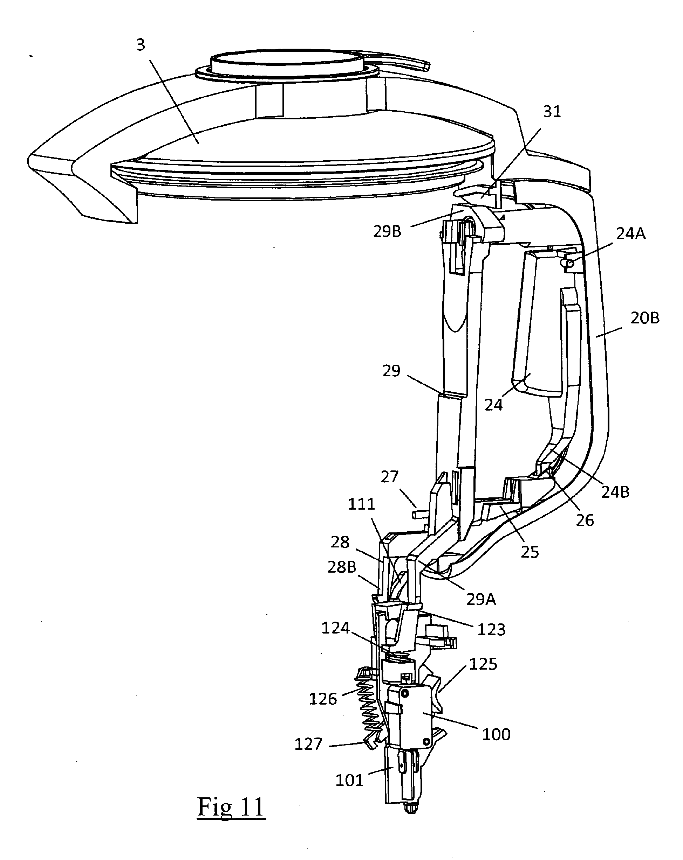

Conformément à la figure 11, lorsque l'utilisateur souhaite verrouiller le couvercle 3 sur le récipient 2, il tourne ce dernier dans le sens anti-horaire, ce qui provoque l'insertion d'une patte 31 portée par le couvercle 3 dans la fente 20C du montant vertical 20A de la poignée, la pate 31 venant alors au contact de la came 29B de la tige de détection 29. L'action de la pate 31 sur la came 29B génère un déplacement vers le bas de la tige de détection 29 de sorte que le doigt d'actionnement 29A appuie sur le bras 123, ce qui provoque une translation verticale de l'organe d'actionnement 120 à l'encontre du ressort 124, cette translation verticale de l'organe d'actionnement 120 étant permise par le coulissement du plot 121 au travers du trou oblong 112 du levier de commande 110 et par le coulissement du tourillon 122 au travers de la lumière 103 du bâti 101. Ce déplacement vers le bas de l'organe d'actionnement 120 est accompagné du déplacement vers le bas de la came 125 qui vient fermer l'interrupteur 100 en appuyant sur le contacteur 100A de ce dernier.

Dans cette position illustrée à la figure 11, dans laquelle le couvercle 3 est verrouillé sur le récipient 2 et la gâchette 24 de la poignée n'est pas enfoncée par l'utilisateur, l'interrupteur 100 est actionné par l'organe d'actionnement 120 de sorte que le moteur 4 et la résistance chauffante 6 peuvent fonctionner sur ordre de la carte de commande 16.

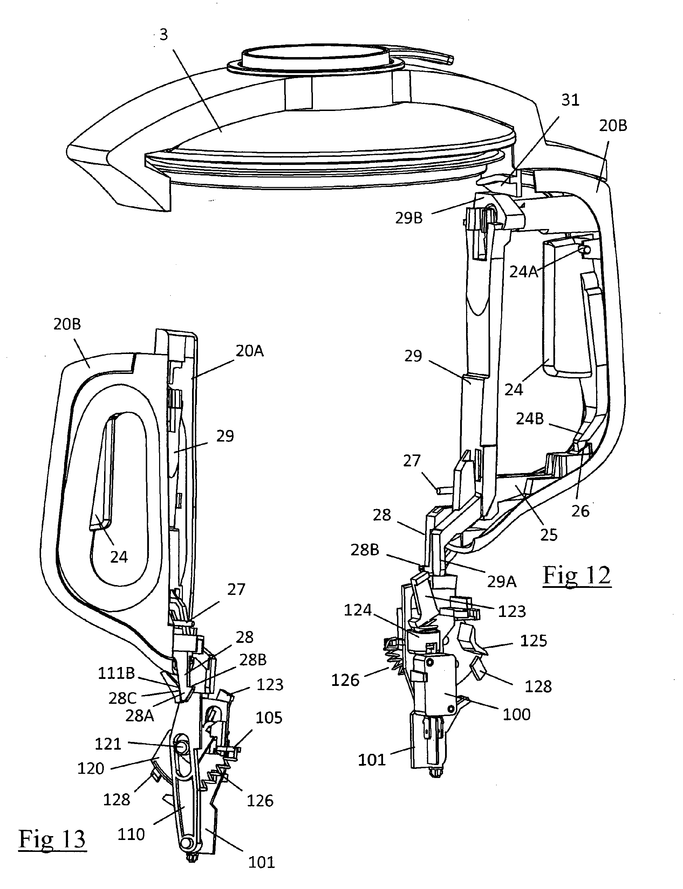

Les figures 12 et 13 illustrent la position du mécanisme d'actionnement de la poignée lorsque l'utilisateur presse sur la gâchette 24 pour retirer le récipient de travail 2 de la base 1. Conformément à ces figures, le basculement de la gâchette 24 sous la pression de la main provoque le recul du coulisseau 25 à l'encontre de son ressort de rappel et donc le déplacement du crochet 28 vers une position de déverrouillage. Lors de ce déplacement en translation du crochet 28, la surface latérale 28C du crochet prend appui sur la surface d'appui 111 B du levier de commande 110, ce qui provoque le basculement de ce dernier autour de l'axe 102 et donc le déplacement du plot 121 vers la périphérie de la base 1, générant ainsi la rotation de l'organe d'actionnement 120 autour de son tourillon 122 à l'encontre de son ressort de rappel 126, la came 125 se trouvant alors écartée du contacteur 100A de l'interrupteur 100 provoquant l'interruption de l'alimentation électrique de la résistance chauffante 6 et du moteur 4.

Le déplacement du crochet 28 vers la poignée 20 provoque simultanément le désengagement de la surface de verrouillage 28B du bord de l'ouverture 15A de sorte que la tête 28A du crochet se trouve alors alignée avec cette ouverture 15A et le récipient de travail 2 peut être extrait de la base 1, cette extraction s'effectuant sans risque de détérioration des broches 62A et des fiches 62B du connecteur qui se trouve alors hors tension.

L'appareil ainsi réalisé présente donc l'avantage de posséder une grande fiabilité et une grande sécurité de fonctionnement, le récipient de travail ne pouvant pas être retiré de sa base sans que l'alimentation de la résistance chauffante 6 électrique et du moteur 4 n'ait été préalablement interrompue.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, l'interrupteur pourra servir à couper seulement l'alimentation électrique de la résistance chauffante.

Ainsi, dans une autre variante de réalisation de l'invention, l'appareil pourra comporter deux interrupteurs indépendants pour couper respectivement l'alimentation électrique de la résistance chauffante et du moteur, l'appareil comportant par exemple un premier interrupteur actionné par la gâchette de commande du récipient et un second interrupteur actionné par la tige de détection de la présence du couvercle.

Ainsi, dans une autre variante de réalisation, le récipient pourra comporter un capteur magnétique tel qu'un capteur magnétique à effet Hall ou un interrupteur à lames souples, pour détecter la présence du récipient et son soulèvement afin de couper l'alimentation électrique de la résistance chauffante lorsque l'appareil détecte le soulèvement du récipient.

## Revendications

1. Appareil électroménager de préparation culinaire comportant une base (1) renfermant un moteur (4) et comprenant un récipient de travail (2) disposé de manière amovible sur ladite base (1), le récipient de travail (2) étant muni d'une poignée de préhension (20) et renfermant un outil (5) entraîné en rotation par ledit moteur (4), le récipient de travail (2) comportant également une résistance chauffante (6) électrique permettant de chauffer le contenu du récipient de travail (2), ladite résistance chauffante (6) électrique étant alimentée par un circuit d'alimentation comportant un connecteur électrique (62A,62B) établissant une liaison déconnectable entre une partie du circuit d'alimentation portée par la base (1) et une partie du circuit d'alimentation portée par le récipient de travail (2), **caractérisé en ce que** ledit circuit d'alimentation comporte un interrupteur (100) permettant d'interrompre l'alimentation électrique de la résistance chauffante (6) et **en ce qu'**un dispositif de sécurité vient actionner ledit interrupteur (100) afin d'interrompre l'alimentation de la résistance chauffante (6) préalablement à la déconnection du connecteur (62A, 62B) lorsque le récipient de travail (2) est retiré de sa base (1).

2. Appareil électroménager de préparation culinaire selon la revendication 1, **caractérisé en ce que** ledit interrupteur (100) est disposé dans la base (1) et **en ce que** ledit dispositif de sécurité comporte des moyens de commande intégrés dans la base (1), aptes à agir sur ledit interrupteur (100), et des moyens d'actionnement intégrés dans la poignée (20) du récipient de travail (2), aptes à agir sur lesdits moyens de commande.

3. Appareil électroménager de préparation culinaire selon la revendication 2, **caractérisé en ce que** ledit dispositif de sécurité comporte une gâchette (24) portée par la poignée (20) du récipient de travail (2), l'actionnement manuel de la gâchette (24) venant interrompre l'alimentation de la résistance chauffante (6).

4. Appareil électroménager de préparation culinaire selon la revendication 3, **caractérisé en ce que** ledit dispositif de sécurité comporte un organe de verrouillage (28) immobilisant automatiquement le récipient de travail (2) sur la base (1) et **en ce que** ledit organe de verrouillage (28) est déplacé dans une position de déverrouillage permettant le retrait du récipient de travail (2) lorsque la gâchette (24) du récipient de travail (2) est activée.

5. Appareil électroménager de préparation culinaire selon la revendication 4, **caractérisé en ce que** ledit organe de verrouillage (28) est constitué par un crochet faisant saillie sur une embase du récipient de travail, ledit crochet (28) venant s'engager dans une ouverture (15A) de la base (1) lorsque le récipient de travail (2) est disposé dans un socle de réception (12) de la base (1).

6. Appareil électroménager de préparation culinaire selon la revendication 5, **caractérisé en ce que** les moyens de commande intégrés dans la base (1) comprennent un levier de commande (110) comportant un ergot (111) venant en bordure du crochet (28) lorsque le récipient de travail (2) est verrouillé sur la base (1), le déplacement du crochet (28) vers la position de déverrouillage entraînant le déplacement du levier de commande (110) dans une position dans laquelle l'alimentation électrique de la résistance chauffante (6) est interrompue par l'interrupteur (100).

7. Appareil électroménager de préparation culinaire selon la revendication 6, **caractérisé en ce que** ledit levier de commande (110) agit sur un organe d'actionnement (120) comportant une came (125) apte à actionner un contacteur (100A) de l'interrupteur (100).

8. Appareil électroménager de préparation culinaire selon la revendication 7, **caractérisé en ce que** les moyens de commande intégrés dans la poignée (20) comportent une tige de détection (29) de la présence d'un couvercle (3) de fermeture du récipient de travail (2), ladite tige de détection (29) agissant sur ledit organe d'actionnement (120) de manière à ce que l'absence de couvercle (3) sur le récipient de travail (2) provoque le déplacement de l'organe d'actionnement (120) dans une position dans laquelle la came (125) n'actionne pas le contacteur (100A) de l'interrupteur.

9. Appareil électroménager de préparation culinaire selon l'une quelconque des revendications 1 à 8, **caractérisé en ce que** ledit interrupteur (100) interrompt également l'alimentation électrique du moteur (4).

## Patentansprüche

1. Elektrohaushaltsgerät zur Nahrungsmittelzubereitung mit einer Basis (1), die einen Motor (4) enthält und einen Arbeitsbehälter (2) aufweist, der abnehmbar auf der Basis (1) angeordnet ist, wobei der Arbeitsbehälter (2) mit einem Haltegriff (20) ausgestattet ist und ein vom Motor (4) in Drehbewegung versetzte Werkzeug (5) umfasst, wobei der Arbeitsbehälter (2) darüber hinaus einen elektrischen Heizwiderstand (6) zum Erhitzen des Inhalts des Arbeitsbehälters (2) aufweist, wobei der genannte elektrische Heizwiderstand (6) über einen Stromkreis versorgt wird, der eine elektrische Steckverbindung (62A, 62B) aufweist, über die eine trennbare Verbindung zwischen einem Teil des Stromkreises in der Basis (1) und einem Teil des Stromkreises im Arbeitsbehälter (2) hergestellt wird, **dadurch gekennzeichnet, dass** der genannte Stromkreis einen Unterbrecher (100) aufweist, mit dem die Stromversorgung des Heizwiderstands (6) unterbrochen werden kann, und dass eine Sicherheitsvorrichtung den genannten Unterbrecher (100) betätigt, um die Stromversorgung des Heizwiderstands (6) zu unterbrechen, bevor die Steckverbindung (62A, 62B) getrennt wird, wenn der Arbeitsbehälter (2) von der Basis (1) abgenommen wird.

2. Elektrohaushaltsgerät zur Nahrungsmittelzubereitung nach Anspruch 1, **dadurch gekennzeichnet, dass** der genannte Unterbrecher (100) in der Basis (1) angeordnet ist und dass die genannte Sicherheitsvorrichtung in die Basis (1) integrierte Steuerelemente umfasst, die dafür ausgelegt sind, auf den genannten Unterbrecher (100) einzuwirken, und in den Haltegriff (20) des Arbeitsbehälters (2) integrierte Betätigungselemente umfasst, die dafür ausgelegt sind, auf die genannten Steuerelemente einzuwirken.

3. Elektrohaushaltsgerät zur Nahrungsmittelzubereitung nach Anspruch 2, **dadurch gekennzeichnet, dass** die genannte Sicherheitsvorrichtung einen Auslöser (24) umfasst, der am Haltegriff (20) des Arbeitsbehälters (2) angeordnet ist, wobei die manuelle Betätigung des Auslösers (24) die Stromversorgung des Heizwiderstands (6) unterbricht.

4. Elektrohaushaltsgerät zur Nahrungsmittelzubereitung nach Anspruch 3, **dadurch gekennzeichnet, dass** die genannte Sicherheitsvorrichtung ein Verriegelungselement (28) aufweist, die den Arbeitsbehälter (2) automatisch auf der Basis (1) fixiert, und dass das genannte Verriegelungselement (28) in eine entriegelte Position verschoben wird, die das Abnehmen des Arbeitsbehälters (2) ermöglicht, wenn der Auslöser (24) des Arbeitsbehälters (2) aktiviert wird.

5. Elektrohaushaltsgerät zur Nahrungsmittelzubereitung nach Anspruch 4, **dadurch gekennzeichnet, dass** das genannte Verriegelungselement (28) aus einem Haken besteht, der aus der Unterseite des Arbeitsbehälters herausragt, wobei der genannte Haken (28) in eine Öffnung (15A) der Basis (1) eingreift, wenn der Arbeitsbehälter (2) im Aufnahmesockel (12) der Basis (1) sitzt.

6. Elektrohaushaltsgerät zur Nahrungsmittelzubereitung nach Anspruch 5, **dadurch gekennzeichnet, dass** die in die Basis (1) integrierten Steuerelemente einen Steuerhebel (110) umfassen, der einen Sporn (111) aufweist, der sich an die Kante des Hakens (28) anlegt, wenn der Arbeitsbehälter (2) auf der Basis verriegelt ist, wobei sich bei Bewegung des Hakens (28) in die entriegelte Position der Steuerhebel (110) in eine Position bewegt, in welcher die Stromversorgung des Heizwiderstands (6) durch den Unterbrecher (100) unterbrochen wird.

7. Elektrohaushaltsgerät zur Nahrungsmittelzubereitung nach Anspruch 6, **dadurch gekennzeichnet, dass** der genannte Steuerhebel (110) auf ein Betätigungsglied (120) wirkt, das eine Nocke (125) aufweist, die einen Kontakt (100A) des Unterbrechers (100) betätigen kann.

8. Elektrohaushaltsgerät zur Nahrungsmittelzubereitung nach Anspruch 7, **dadurch gekennzeichnet, dass** die in den Haltegriff (20) integrierten Steuerelemente ein Erkennungsorgan (29) aufweisen, das erkennt, ob ein Deckel (3) zum Schließen des Arbeitsbehälters (2) vorhanden ist, wobei das genannte Erkennungsorgan (29) auf das Betätigungsglied (120) so einwirkt, dass ein Fehlen des Deckels (3) auf dem Arbeitsbehälter (2) bewirkt, dass sich das Betätigungsglied (120) in eine Position bewegt, in der die Nocke (125) den Kontakt (100A) des Unterbrechers nicht betätigt.

9. Elektrohaushaltsgerät zur Nahrungsmittelzubereitung nach einem der Ansprüche 1 bis 8, **dadurch gekennzeichnet, dass** der genannte Unterbrecher (100) auch die Stromversorgung des Motors (4) unterbricht.

## Claims

1. Food preparation household electrical appliance comprising a base (1) containing a motor (4) and comprising a working receptacle (2) arranged removably on said base (1), the working receptacle (2) being equipped with a handle (20) and containing a tool (5) driven in rotation by said motor (4), the working receptacle (2) also comprising an electrical heating element (6) for heating the content of the working receptacle (2), said electrical heating element (6) being powered by a power supply circuit having an electrical connector (62A, 62B) establishing a disconnectable link between a part of the power supply circuit on the base (1) and a part of the power supply circuit on the working receptacle (2), **characterised in that** said power supply circuit comprises a switch (100) for interrupting the electricity supply to the heating element (6) and **in that** a safety device actuates said switch (100) in order to interrupt the electricity supply to the heating element (6) prior to disconnection of the connector (62A, 62B) when the working receptacle (2) is removed from its base (1).

2. Food preparation household electrical appliance according to claim 1, **characterised in that** said switch (100) is arranged in the base (1) and **in that** said safety device comprises control means incorporated in the base (1), capable of acting on said switch (100), and actuating means incorporated in the handle (20) of the working receptacle (2), capable of acting on said control means.

3. Food preparation household electrical appliance according to claim 2, **characterised in that** said safety device comprises a trigger (24) on the handle (20) of the working receptacle (2), manual actuation of the trigger (24) interrupting the electricity supply to the heating element (6).

4. Food preparation household electrical appliance according to claim 3, **characterised in that** said safety device comprises a locking member (28) automatically immobilising the working receptacle (2) on the base (1) and **in that** said locking member (28) is moved into an unlocked position to remove the working receptacle (2) when the trigger (24) of the working receptacle (2) is activated.

5. Food preparation household electrical appliance according to claim 4, **characterised in that** said locking member (28) is formed by a hook protruding from a base of the working receptacle, said hook (28) engaging in an opening (15A) of the base (1) when the working receptacle (2) is placed in a socket (12) of the base (1).

6. Food preparation household electrical appliance according to claim 5, **characterised in that** the control means incorporated in the base (1) comprise a control lever (110) with a pin (111) reaching the edge of the hook (28) when the working receptacle (2) is locked to the base (1), the movement of the hook (28) to the unlocked position causing the control lever (110) to move to a position in which the electricity supply to the heating element (6) is interrupted by the switch (100).

7. Food preparation household electrical appliance according to claim 6, **characterised in that** said control lever (110) acts on an actuating member (120) having a cam (125) capable of actuating a contactor (100A) of the switch (100).

8. Food preparation household electrical appliance according to claim 7, **characterised in that** the control means incorporated in the handle (20) comprise a detection rod (29) for detecting the presence of a lid (3) for closing the working receptacle (2), said detection rod (29) acting on said actuating member (120) so that the absence of lid (3) on the working receptacle (2) causes the actuation member (120) to move to a position in which the cam (125) does not actuate the contactor (100A) of the switch.

9. Food preparation household electrical appliance according to one of claims 1 to 8, **characterised in that** said switch (100) also interrupts the electricity supply to the motor (4).
